# EUROPEAN PATENT SPECIFICATION

(11) **EP 2 620 483 B1**
(45) Date of publication and mention of the grant of the patent: **10.02.2016**
(21) Application number: 11826902.6
(22) Date of filing: 22.09.2011
(51) Int. Cl.: C09J 7/02, C09J 133/06, H01G 9/048, H01M 10/0587, C09J 123/08, C09J 123/20, C09J 123/26, C09J 133/00, H01G 11/14, H01G 11/80, H01G 11/06, H01M 2/02, H01M 10/04

(54) **ADHESIVE FILM FOR ORGANIC ELECTROLYTE ACCUMULATOR DEVICES**
HAFTFOLIE FÜR ORGANISCHE ELEKTROLYTAKKUMULATORVORRICHTUNGEN
FILM ADHÉSIF POUR DISPOSITIFS D'ACCUMULATEUR ÉLECTROLYTIQUE ORGANIQUE

(30) Priority: 22.09.2010 JP 2010212538
(43) Date of publication of application: 31.07.2013
(73) Proprietor: Zeon Corporation, Tokyo 100-8246 (JP)
(72) Inventor: MAEDA, Kouichirou, Tokyo 100-8246 (JP)
(74) Representative: Vossius & Partner Patentanwälte Rechtsanwälte mbB
(86) International application number: PCT/JP2011/071616
(87) International publication number: WO 2012/039457

(56) References cited:
- WO-A1-2009/139388
- JP-A- H0 641 364
- JP-A- H1 095 881
- JP-A- H06 181 058
- JP-A- H10 247 503
- JP-A- 2004 156 048
- JP-A- 2007 184 238

## Description

### TECHNICAL FIELD

The present invention relates to adhesive film for organic electrolyte-type energy storage device, more particularly relates to adhesive film for fastening a wound up energy storage element or for insulation of tab parts for input/output of electric power to the energy storage element.

### BACKGROUND ART

In a lithium ion secondary cell or electric double layer capacitor, lithium ion capacitor, or other organic electrolyte-type energy storage device, adhesive film is used at the outer circumference of the wound up energy storage element so as to hold and insulate the wound up structure. In addition, in these organic electrolyte-type energy storage devices, adhesive film is used at the tab parts for input/output of electric power to the wound up energy storage element so as to prevent short-circuits due to contact of the pair of tabs with each other or contact with the outer jacket.

As such an adhesive film, for example, Patent Document 1 discloses an adhesive film comprised of a substrate film made of polypropylene on which an adhesive layer made of an acrylic-based adhesive agent is formed. However, in the adhesive film which is described in this Patent Document 1, the electrolytic solution resistance to the organic electrolyte which is used for the organic electrolyte type energy storage device is low. Therefore, sometimes this caused a deterioration in the performance of the organic electrolyte-type energy storage device.

### PRIOR ART DOCUMENTS

### PATENT DOCUMENTS

Patent Document 1: Japanese Patent Publication (A) No. 2005-126452

### DISCLOSURE OF THE INVENTION

### PROBLEM TO BE SOLVED BY THE INVENTION

The present invention has as its object the provision of an adhesive film for organic electrolyte-type energy storage device use which is excellent in heat resistance and electrolytic solution resistance and which has a high bond strength.

### MEANS FOR SOLVING THE PROBLEMS

The inventors engaged in intensive studies to achieve the above obj ect and as a result discovered that an adhesive film which is comprised of a substrate film made of a resin composition consisting of a cross-linked cyclic olefin polymer in which an elastomer ingredient is included and, over that, an adhesive film made of an adhesive layer consisting of an acrylic-based adhesive agent is excellent in heat resistance and electrolytic solution resistance and further has a high bond strength and thereby completed the present invention.

That is, according to the present invention, there is provided an adhesive film for organic electrolyte-type energy storage device having a substrate film comprised of a resin composition which contains a cross-linked cyclic olefin polymer and an elastomer, and having an adhesive layer comprised of an acrylic-based adhesive agent which is formed on the substrate film.

Preferably, the elastomer is an olefin-based elastomer. Preferably, the olefin-based elastomer is at least one type of elastomer which is selected from an ethylene-α-olefin copolymer elastomer and ethylene-propylene-diene copolymer elastomer.

Preferably, the substrate film has a thickness of 1 to 500 µm.

Preferably, the substrate film is comprised of a resin composition which is obtained by bulk polymerization of a polymerizable composition which contains a cyclic olefin monomer, elastomer, and polymerization catalyst.

Further, the adhesive film for organic electrolyte-type energy storage device of the present invention is suitably used for fastening a wound up battery element or for insulation of tab parts for input/output of electric power to and from the energy storage element.

### EFFECTS OF THE INVENTION

According to the present invention, it is possible to provide an adhesive film for organic electrolyte-type energy storage device which is excellent in heat resistance and electrolytic solution resistance and has a high bond strength (in particular, has a high bond strength with respect to materials forming the organic electrolyte-type energy storage device).

### DESCRIPTION OF EMBODIMENTS

The adhesive film for organic electrolyte-type energy storage device of the present invention is an adhesive film which has a substrate film comprised of a resin composition which contains a cross-linked cyclic olefin polymer and an elastomer and, formed on the substrate film, an adhesive layer comprised of an acrylic-based adhesive agent.

First, the ingredients forming the resin composition which forms the substrate film will be explained.

### (Cross-Linked Cyclic Olefin Polymer)

The cross-linked cyclic olefin polymer which is used in the present invention is a polymer which is obtained by polymerization of a cyclic olefin monomer (cyclic olefin polymer) and has a three-dimensionally cross-linked structure. The cross-linked cyclic olefin polymer which is used in the present invention has a cross-linking degree, expressed by the insolubles when immersing the polymer in 1,2-dichlorobenzene at 23°C for 24 hours and filtering the obtained solution by a 80 mesh metal screen, of preferably 70 wt% or more, more preferably 80 wt% or more, furthermore preferably 85 wt% or more. If the cross-linking degree is too low, the desired heat resistance or mechanical strength will sometimes not be able to be expressed.

The cyclic olefin monomer which is used in the production of the cross-linked cyclic olefin polymer is a compound which has a ring structure which is formed by carbon atoms and which has carbon-carbon double bonds in the ring. As examples, norbornene-based monomers and monocyclic cyclic olefins etc. may be mentioned, but norbornene-based monomers are preferable. Norbornene-based monomers are monomers which include norbornene rings. For example, norbornenes, dicyclopentadienes, tetracyclododecenes, etc. may be mentioned. These may include an alkyl group, alkenyl group, alkylidene group, aryl group, or other hydrocarbon group or a carboxyl group or acid anhydride group or other polar group as a substituent.

Further, the norbornene-based monomers may further have double bonds in addition to the double bonds of the norbornene rings. Among these as well, from the viewpoint of being able to further improve the electrolytic solution resistance of the obtained adhesive film, a norbornene-based monomer which is nonpolar, that is, does not have polar groups and is comprised of only carbon atoms and hydrogen atoms, is preferable.

As nonpolar norbornene-based monomers, dicyclopentadiene, methyldicyclopentadiene, dihydrodicyclopentadiene (also called tricyclo[5.2.1.0^{2,6}]deca-8-ene), or other nonpolar dicyclopentadienes;

tetracyclo[6.2.1.1^{3,6}.0^{2,7}] dodeca-4-ene, 9-methyl-tetracyclo [6.2.1.1^{3,6}.0^{2,7}] dodeca-4-ene, 9-ethyltetracyclo[6.2.1.1^{3,6}.0^{2,7}] dodeca-4-ene, 9-cyclohexyltetracyclo[6.2.1.1^{3,6}.0^{2,7}]dodeca-4-ene, 9-cyclopentyltetracyclo[6.2.1.1^{3,6}.0^{2,7}]dodeca-4-ene, 9-methylenetetracyclo[6.2.1.1^{3,6}.0^{2,7}]dodeca-4-ene, 9-ethylidenetetracyclo[6.2.1.1^{3,6}.0^{2,7}]dodeca-4-ene, 9-vinyltetracyclo[6.2.1.1^{3,6}.0^{2,7}]dodeca-4-ene, 9-propenyltetracyclo[6.2.1.1^{3,6}.0^{2,7}]dodeca-4-ene, 9-cyclohexenyltetracyclo[6.2.1.1^{3,6}.0^{2,7}]dodeca-4-ene, 9-cyclopentenyltetracyclo[6.2.1.1^{3,6}.0^{2,7}]dodeca-4-ene, 9-phenyltetracyclo[6.2.1.1^{3,6}.0^{2,7}]dodec-4-ene, or other nonpolar tetracyclododecenes;
2-norbornene, 5-methyl-2-norbornene, 5-ethyl-2-norbornene, 5-butyl-2-norbornene, 5-hexyl-2-norbornene, 5-decyl-2-norbornene, 5-cyclohexyl-2-norbornene, 5-cyclopentyl-2-norbornene, 5-ethylidene-2-norbornene, 5-vinyl-2-norbornene, 5-propenyl-2- norbornene, 5-cyclohexenyl-2-norbornene, 5-cyclopentenyl-2-norbornene, 5-phenyl-2-norbornene, tetracyclo[9.2.1.0^{2,10}.0^{3,8}] tetradeca-3,5,7,12-tetraene (also called 1,4-methano-1,4,4a,9a-tetrahydro-9H-fluorene), tetracyclo[10.2.1.0^{2,11}.0^{4,9}] pentadeca-4,6,8,13-tetraene (also called 1,4-methano-1,4,4a,9,9a,10-hexahydroanthracene), or other nonpolar norbornenes;
tricyclopentadiene, pentacyclo [6.5.1.1^{3,6}.0^{2,7}.0^{9,13}] pentadeca-4,10-diene, pentacyclo[9.2.1.1^{4,7}.0^{2,10}.0^{3,8}] pentadeca-5,12-diene, hexacyclo[6.6.1.1^{3,6}.1^{10,13}.0^{2,7}.0^{9,14}]heptadeca-4-ene, or other five-ring or higher nonpolar cyclic olefins; etc. may be mentioned.

Among these nonpolar norbornene-based monomers as well, from the viewpoints of easy availability and the high heat resistance cross-linked polymer obtained, nonpolar dicyclopentadienes and nonpolar tetracyclododecenes are preferable, and nonpolar dicyclopentadienes are more preferable.

Further, as a norbornene-based monomer which contains a polar group, methyl tetracyclo[6.2.1.1^{3,6}.0^{2,7}] dodeca-9-ene-4-carboxylate, tetracyclo[6.2.1.1^{3,6}.0^{2,7}]dodeca-9-ene-4-methanol, tetracyclo[6.2.1.1^{3,6}.0^{2,7}]dodeca-9-ene-4-carboxylic acid, tetracyclo[6.2.1.1^{3,6}.0^{2,7}]dodeca-9-ene-4, 5-dicarboxylic acid, tetracyclo[6.2.1.1^{3,6}.0^{2,7}]dodeca-9-ene-4,5-dicarboxylic acid anhydride, methyl 5-norbornene-2-carboxylate, methyl 2-methyl-5-norbornene-2-carboxylate, 5-norbornene-2-yl acetate, 5-norbornene-2-methanol, 5-norbornene-2-ol, 5-norbornene-2-carbonitrile, 2-acetyl-5-norbornene, 7-oxa-2-norbornene, etc. may be mentioned.

As monocyclic cyclic olefins, cyclobutene, cyclopentene, cyclooctene, cyclododecene, 1,5-cyclooctadiene, and derivatives of the same which have substituents may be mentioned.

These cyclic olefin monomers may be used as single types alone or two or more types combined. However, the amount of addition of the monocyclic cyclic olefin in the cyclic olefin monomers is, with respect to the entire amount of cyclic olefin monomers, preferably 40 wt% or less, more preferably 20 wt% or less. If the amount of addition of the monocyclic cyclic olefin is too large, the obtained cross-linked cyclic olefin polymer sometimes is insufficient in heat resistance.

The cross-linked cyclic olefin polymer which is used for the present invention can be obtained by polymerizing the above-mentioned cyclic olefin monomers by ring-opening metathesis polymerization using a polymerization catalyst. The polymerization catalyst is not particularly limited so long as polymerizing a cyclic olefin monomer by ring-opening metathesis polymerization.

As a polymerization catalyst, a complex having a transition metal atom as the center atom around which a plurality of ions, atoms, polyatomic ions, and/or polyatomic compounds are bonded may be used. As transition metal atoms, atoms of Group V, Group VI, and Group VIII (according to the long-form Periodic Table, same below) are used. The atoms of the groups are not particularly limited, but as atoms of Group V, preferably tantalum may be mentioned, as atoms of Group VI, preferably, molybdenum and tungsten may be mentioned, and as atoms of Group VIII, preferably ruthenium or osmium may be mentioned.

Among these as well, use of a complex of ruthenium or osmium of Group VIII as a polymerization catalyst is preferable, while a ruthenium-carbene complex comprised of a carbene compound coordinated to ruthenium is particularly preferable. A ruthenium-carbene complex is excellent in catalytic activity at the time of bulk polymerization, so it is possible to obtain a cross-linked cyclic olefin polymer with few residual unreacted monomers with good productivity. Here, a "carbene compound" is the general name for a compound which has a methylene radical and means a compound which has a bivalent carbon atom (carbene carbon) with no charge such as expressed by (>C:).

As the ruthenium-carbene complex, from the viewpoint of obtaining a higher activity polymerization catalyst, a complex of the following general formula (1) or general formula (2) is preferable.

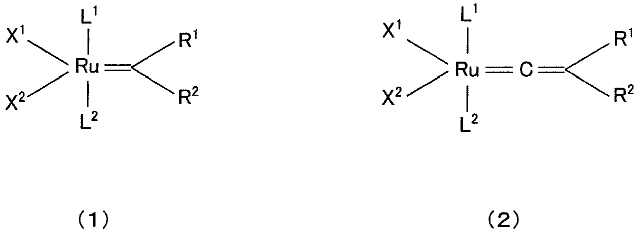

In the general formulas (1) and (2), R¹ and R² respectively independently indicate a hydrogen atom; halogen atom; or cyclic or chain C₁ to C₂₀ hydrocarbon group which may contain a halogen atom, oxygen atom, nitrogen atom, sulfur atom, phosphorus atom, or silicon atom. X¹ and X² respectively independently indicate any anionic ligand. L¹ and L² respectively independently indicate a neutral electron donor compound. Further, R¹ and R² may be bonded with each other to form an aliphatic ring or aromatic ring. In this case, they may include a heteroatom. Furthermore, R¹, R², X¹, X², L¹, and L² may be freely combined and bonded with each other to form a multisite chelating ligand.

In the present invention, a "heteroatom" means atoms of Group XV and Group XVI of the Periodic Table. As specific examples of heteroatoms, nitrogen atoms (N), oxygen atoms (O), phosphorus atoms (P), sulfur atoms (S), arsenic atoms (As), selenium atoms (Se), etc. may be mentioned. Among these as well, from the viewpoint of stable carbene compounds being obtained, N, O, P, and S are preferable, N is particularly preferable.

In the above formulas (1) and (2), the neutral electron donor compounds which are expressed by L¹ and L² may be ligands which have neutral charges when separated from the center metals, but usually can be roughly classified into heteroatom-containing carbene compounds and other neutral electron donor compounds. From the viewpoint of the polymerization catalyst becoming higher in activity, heteroatom-containing carbene compounds are preferable. Among the heteroatom-containing carbene compounds as well, one comprised of a carbene carbon atom at the two sides of which adjacent heteroatoms are bonded is preferable, while one comprised of a carbene carbon atom and heteroatoms adjacent to their two sides forming a hetero ring is more preferable. Further, the heteroatoms adjacent to the carbene carbon atoms preferably have bulky substituents bonded to them.

As the heteroatom-containing carbene compound, a compound expressed by the following general formula (3) or general formula (4) is preferable.

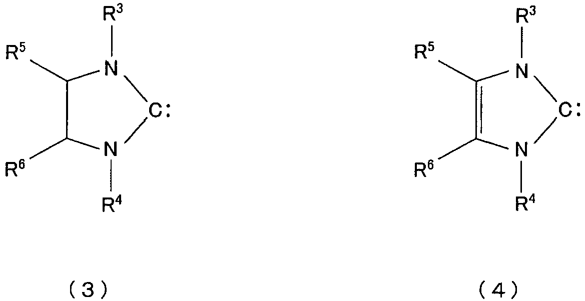

In the above general formulas (3) and (4), R³ to R⁶ independently indicate a hydrogen atom; halogen atom; or cyclic or chain C₁ to C₂₀ hydrocarbon groups which may contain a halogen atom, oxygen atom, nitrogen atom, sulfur atom, phosphorus atom, or silicon atom. Further, R³ to R⁶ may bond together in any combinations to form rings.

As specific examples of the compound expressed by the above general formula (3) or general formula (4), 1,3-dimesityl-imidazolidin-2-ylidene, 1,3-di(1-adamantyl)imidazolidin-2-ylidene, 1-cyclohexyl-3-mesityl-imidazolidin-2-ylidene, 1,3-dimesityl-octahydrobenzimidazol-2-ylidene, 1,3-diisopropyl-4-imidazolin-2-ylidene, 1,3-di(1-phenylethyl)-4-imidazolin-2-ylidene, 1,3-dimesityl-2,3-dihydrobenzimidazol-2-ylidene, etc. may be mentioned.

Further, as the heteroatom-containing carbene compound, in addition to the compounds expressed by the above general formula (3) or general formula (4), 1,3,4-triphenyl-2,3,4,5-tetrahydro-1H-1,2,4-triazol-5-ylidene, 1,3-dicyclohexyl-hexahydropyrimidin-2-ylidene, N,N,N',N'-tetraisopropyl-formamidinylidene, 1,3,4-triphenyl-4,5-dihydro-1H-1,2,4-triazol-5-ylidene, 3-(2,6-diisopropylphenyl)-2,3-dihydrothiazol-2-ylidene, etc. may be used.

Note that, the neutral electron donor compounds other than heteroatom-containing carbene compounds need only be ligands which have neutral charges when separated from the center metals. As specific examples, carbonyls, amines, pyridines, ethers, nitriles, esters, phosphines, thioethers, aromatic compounds, olefins, isocyanides, thiocyanates, etc. may be mentioned. Among these as well, phosphines, ethers, and pyridines are preferable, while trialkyl phosphines are more preferable.

Further, in the general formulas (1) and (2), the anionic (negative ionic) ligands expressed by X¹ and X² are ligands which have negative charges when separated from the center metal atoms. For example, a fluorine atom (F), chlorine atom (Cl), bromine atom (Br), iodine atom (I), or other halogen atom, a diketonate group, substituted cyclopentadienyl group, alkoxy group, aryloxy group, carboxyl group, etc. may be mentioned. Among these as well, a halogen atom is preferable, while a chlorine atom is more preferable.

In the present invention, as one example of a ruthenium-carbene complex of the above general formula (1) where X² and L² bond with each other to form a multisite chelating ligand, a Schiff base ligand complex of the following formula (5) may be mentioned.

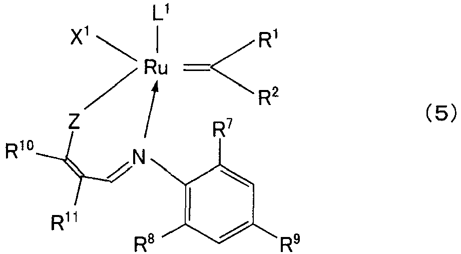

In the general formula (5), Z indicates an oxygen atom, sulfur atom, selenium atom, NR¹², PR¹², or AsR¹². Note that, R¹² is similar to R¹ and R².

Further, in the general formula (5), R⁷ to R⁹ respectively independently indicate a hydrogen atom, halogen atom, or a monovalent organic group which may contain a heteroatom. As the monovalent organic group which may contain a heteroatom, a C₁ to C₂₀ alkyl group, C₂ to C₂₀ alkenyl group, C₂ to C₂₀ alkynyl group, aryl group, C₁ to C₂₀ alkoxyl group, C₂ to C₂₀ alkenyloxy group, C₂ to C₂₀ alkynyloxy group, aryloxy group, C₁ to C₈ alkylthio group, C₁ to C₂₀ carbonyloxy group, C₁ to C₂₀ alkoxycarbonyl group, C₁ to C₂₀ alkylsulfonyl group, C₁ to C₂₀ alkylsulfinyl group, C₁ to C₂₀ alkylsulfonic acid group, arylsulfonic acid group, C₁ to C₂₀ phosphoric acid group, arylphosphoric acid group, C₁ to C₂₀ alkylammonium group, and arylammonium group may be mentioned.

These monovalent organic groups which may contain a heteroatom may also have substituents and may bond with each other to form rings. As examples of the substituents, a C₁ to C₁₀ alkyl group, C₁ to C₁₀ alkoxyl group, and aryl group may be mentioned. Further, the ring in the case of forming a ring may be any of an aromatic ring, alicyclic ring, and hetero ring.

In the general formula (5), R¹⁰ and R¹¹ respectively independently indicate a hydrogen atom, C₁ to C₂₀ alkyl group, C₂ to C₂₀ alkenyl group, or heteroaryl group. These groups may have substituents and, further, may be bonded with each other to form rings. As examples of the substituents, a C₁ to C₁₀ alkyl group, C₁ to C₁₀ alkoxyl group, and aryl group may be mentioned. The ring in the case of forming a ring may be any of an aromatic ring, alicyclic ring, and hetero ring.

As specific examples of the complex compound which is expressed by the general formula (1), benzylidene(1,3-dimesitylimidazolidin-2-ylidene)(tricyclohexylphosphine)ruthenium dichloride, benzylidene(1,3-dimesityl-4,5-dibromo-4-imidazolin-2-ylidene)(tricyclohexylphosphine)ruthenium dichloride, (1,3-dimesityl-4-imidazolin-2-ylidene)(3-phenyl-1H-inden-1-ylidene) (tricyclohexylphosphine)ruthenium dichloride, (1,3-dimesitylimidazolidin-2-ylidene)(3-methyl-2-buten-1-ylidene) (tricyclopentylphosphine)ruthenium dichloride, benzylidene(1,3-dimesityl-octahydrobenzimidazol-2-ylidene)(tricyclohexylphosphine) ruthenium dichloride, benzylidene[1,3-di(1-phenylethyl)-4-imidazolin-2-ylidene](tricyclohexylphosphine)ruthenium dichloride, benzylidene(1,3-dimesityl-2,3-dihydrobenzimidazol-2-ylidene) (tricyclohexylphosphine)ruthenium dichloride, benzylidene (tricyclohexylphosphine)(1,3,4-triphenyl-2,3,4,5-tetrahydro-1H-1,2,4-tri azol-5-ylidene)ruthenium dichloride, (1,3-diisopropyl-hexahydropyrimidin-2-ylidene)(ethoxymethylene)(tricyclohexyl-phosphine)ruthenium dichloride, benzylidene(1,3-dimesityl-imidazolidin-2-ylidene)pyridine ruthenium dichloride, (1,3-dimesitylimidazolidin-2-ylidene)(2-phenylethylidene) (tricyclohexylphosphine)ruthenium dichloride, (1,3-dimesityl-4-imidazolin-2-ylidene) (2-phenylethylidene) (tricyclohexylphosphine) ruthenium dichloride, (1,3-dimesityl-4,5-dibromo-4-imidazolin-2-ylidene)[(phenylthio)methylene](tricyclohexylphosphine)ruthenium dichloride, (1,3-dimesityl-4,5-dibromo-4-imidazolin-2-ylidene) (2-pyrrolidon-1-ylmethylene)(tricyclohexylphosphine)ruthenium dichloride, or other ruthenium complex compound to which one heteroatom-containing carbene compound and one neutral electron donor compound are bonded;

benzylidene bis(tricyclohexylphosphine)ruthenium dichloride, (3-methyl-2-buten-1-ylidene) bis(tricyclopentylphosphine)ruthenium dichloride, or other ruthenium complex compound to which two neutral electron donor compounds are bonded;

benzylidene bis(1,3-dicyclohexylimidazolidin-2-ylidene) ruthenium dichloride, benzylidene bis(1,3-diisopropyl-4-imidazolin-2-ylidene) ruthenium dichloride, or other ruthenium complex compound to which two heteroatom-containing carbene compounds are bonded;

a ruthenium-carbene complex compound expressed by the following general formula (6) where X² and L² are bonded with each other to form a multisite chelating ligand; etc. may be mentioned.

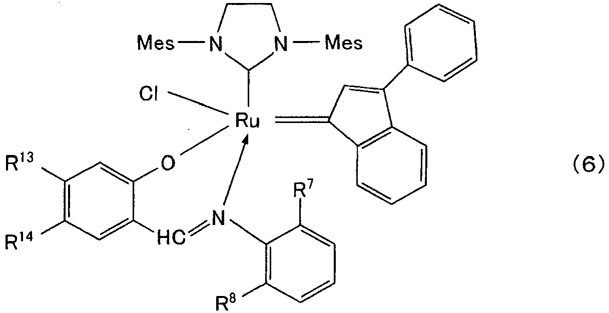

In the above general formula (6), Mes indicates a mesityl group. R⁷ and R⁸ are respectively hydrogen atoms or methyl groups, where at least one is a methyl group. R¹³ and R¹⁴ respectively independently indicate a hydrogen atom, halogen atom, or monovalent organic group which may contain a heteroatom. Note that, as the "monovalent organic group", ones the same as in the above R⁷ to R⁹ may be mentioned.

Further, as specific examples of the complex compounds which are expressed by the above general formula (2), (1,3-dimesityl-imidazolidin-2-ylidene)(phenylvinylidene)(tricyclohexylphosphine)rutheni um dichloride, (t-butylvinylidene)(1,3-diisopropyl-4-imidazolin-2-ylidene)(tricyclopentylphosphine)ruthenium dichloride, bis(1,3-dicyclohexyl-4-imidazolin-2-ylidene)phenylvinylidene ruthenium dichloride, etc. may be mentioned.

Among the above-mentioned ruthenium complex compounds, a compound of the above general formula (1) which has one compound expressed by the above general formula (3) or (4) as a ligand is particularly preferable.

These ruthenium complex compounds can be produced, for example, by the method described in Org. Lett., 1999, vol. 1, p. 953, Tetrahedron. Lett., 1999, vol. 40, p. 2247, WO2003/062253 pamphlet, etc.

The amount of the polymerization catalyst used is, in terms of molar ratio of (metal atoms in polymerization catalyst:cyclic olefin monomer), usually 1:2,000 to 1:2,000,000, preferably 1:5,000 to 1:1,000,000, more preferably 1:10,000 to 1:500,000 in range. If the amount of the polymerization catalyst is too small, the polymerization reaction rate is liable to fall and monomer to remain in the polymer or the cross-linked cyclic olefin polymer is liable to fall in cross-linking degree and the obtained adhesive film to fall in heat resistance. On the other hand, if the amount of the polymerization catalyst is too large, a rise in manufacturing cost will be invited or the reaction speed will become too fast and, at the time of bulk polymerization, a film-shaped article cannot be obtained.

For the purpose of controlling the polymerization activity of the polymerization catalyst and improving the polymerization reaction rate, an activant (co-catalyst) may be jointly used with the above-mentioned polymerization catalyst. As the activant, aluminum, scandium, tin, and silicon alkylates, halogenates, alkoxylates, aryloxylates, etc. may be mentioned. Specifically, trialkoxy aluminum, triphenoxy aluminum, dialkoxyalkyl aluminum, alkoxydialkyl aluminum, trialkyl aluminum, dialkoxy aluminum chloride, alkoxyalkyl aluminum chloride, dialkyl aluminum chloride, or other aluminum compound; trialkoxy scandium or other scandium compound; tetraalkoxy titanium or other titanium compound; tetraalkyl tin, tetraalkoxy tin, or other tin compound; tetraalkoxy zirconium or other zirconium compound; dimethylmonochlorosilane, dimethyldichlorosilane, diphenyldichlorosilane, tetrachlorosilane, bicycloheptenylmethyldichlorosilane, phenylmethyldichlorosilane, dihexyldichlorosilane, phenyltrichlorosilane, methyltrichlorosilane, or other silane compound; etc. may be used.

The amount of the activant used is, in terms of the molar ratio of (center metal atoms in polymerization catalyst:activant), usually 1:0.05 to 1:100, preferably 1:0.2 to 1:20, more preferably 1:0.5 to 1:10 in range.

For the purpose of controlling the polymerization activity of the polymerization catalyst and regulating the polymerization reaction speed, it is possible to jointly use a polymerization regulator together with the above-mentioned polymerization catalyst. As a polymerization regulator, for example, triphenylphosphine, tricyclohexylphosphine, tributylphosphine, 1,1-bis (diphenylphosphino)methane, 1,4-bis(diphenylphosphino)butane, 1,5-bis(diphenylphosphino)pentane, or other phosphorus compound; ethers, esters, nitriles, or other Lewis bases; etc. may be preferably mentioned. The amounts of these used is, with respect to 1 mole of polymerization catalyst, usually 0.01 to 50 moles, preferably 0.05 to 10 moles.

### (Elastomer)

The elastomer which is used in the present invention need only be one which has rubbery elasticity at 0°C or more and which has at least one glass transition point of 0°C or less. It is not particularly limited. By using the elastomer, it is possible to maintain the heat resistance ability of the cross-linked cyclic olefin polymer which is contained in the resin composition while giving flexibility to the adhesive film which is obtained.

As specific examples of this elastomer, an ethylene-α-olefin copolymer elastomer, ethylene-propylene-diene copolymer elastomer, butyl rubber, or other olefin-based elastomer; natural rubber, butadiene rubber (BR), styrene-butadiene rubber (SBR), or other conjugated diene rubber and their cross-linked products; styrene-butadiene-styrene block copolymer (SBS) and its hydrogenate (SEBS), styrene-isoprene-styrene block copolymer (SIS) and its hydrogenate (SEPS), or other styrene-containing thermoplastic elastomer; etc. may be mentioned.

Among these as well, from the viewpoint of being able to maintain the heat resistance ability of the cross-linked cyclic olefin polymer which is contained in the resin composition while giving flexibility to the obtained adhesive film and, further, giving excellent electrolytic solution resistance, a nonopolar elastomer which is comprised of a polymer of only hydrocarbon monomers is preferable, while an olefin-based elastomer is more preferable. From the viewpoint of the ease of availability and the inexpensive cost, an ethylene-α-olefin copolymer elastomer and ethylene-propylene-diene copolymer elastomer are more preferable. As the ethylene-α-olefin copolymer elastomer, for example, an ethylene-propylene elastomer, ethylene-butene elastomer, and ethylene-octene elastomer may be mentioned. Among these, an ethylene-propylene elastomer is preferable.

The elastomer may be used as one type alone or may be used as two or more types combined. The amount of the elastomer used is, with respect to 100 parts by weight of the cross-linked cyclic olefin polymer, preferably 0.5 to 90 parts by weight, more preferably 2 to 60 parts by weight, furthermore preferably 2 to 30 parts by weight in range. If the amount used is too small, the obtained adhesive film sometimes becomes low in flexibility, while if too large, it sometimes falls in mechanical strength at a high temperature.

The resin composition which is used in the present invention may contain various types of additives. As the additives, for example, an antioxidant, filler, defoamer, foam agent, coloring agent, UV absorber, optical stabilizer, flame retardant, moistening agent and dispersant, mold release lubricant, plasticizer, etc. may be mentioned. In particular, to improve the durability and storage stability of the cross-linked cyclic olefin polymer which is contained in the resin composition, inclusion of an antioxidant is preferable.

As the antioxidant, for example, p-benzoquinone, toluquinone, naphthoquinone, and other quinones; hydroquinone, p-t-butylcatechol, 2,5-di-t-butylhydroquinone, and other hydroquinones; di-t-butyl p-cresol, hydroquinone monomethylether, pyrogallol, and other phenols; copper naphthenate, copper octenate, and other copper salts; trimethylbenzylammonium chloride, trimethylbenzylammonium maleate, phenyltrimethylammonium chloride, and other quaternary ammonium salts; quinone dioxime, methylethylketoxime, and other oximes; triethylamine hydrochloride, dibutylamine hydrochloride, and other amine hydrochlorides; etc. may be mentioned. These antioxidants may be suitably selected in type and amount in accordance with the high temperature mechanical properties of the cross-linked cyclic olef in polymer, the compatibility with the elastomer, the film- forming work efficiency, the storage stability, and other conditions. Among these, phenols are high in compatibility with cross-linked cyclic olefin polymer, can be homogeneously dispersed in the resin composition, and can improve the durability and storage stability of the obtained adhesive film, so are preferred. The antioxidant may be used as single types alone or may be used as two or more types combined. The amount of use of the antioxidant when using an antioxidant is, with respect to 100 parts by weight of the cross-linked cyclic olefin polymer, preferably 0.001 to 10 parts by weight.

As a filler, for example, silica, silicate, glass powder, calcium carbonate, aluminum hydroxide, magnesium hydroxide, clay, or other inorganic filler; polyester or polystyrene beads or other organic fillers; etc. may be mentioned. By blending the filler, the obtained adhesive film can be improved in shrinkage rate, elasticity, heat conductivity, or other physical properties. The particle size, shape, aspect ratio, grade, or other aspects of the filler can be suitably determined by the physical properties of the cross-linked cyclic olefin polymer. The filler may be used as a single type alone or may be used as two or more types combined. The amount of the filler used when using the filler is, with respect to 100 parts by weight of the cross-linked cyclic olefin polymer, preferably 5 to 400 parts by weight, more preferably 10 to 300 parts by weight.

### (Substrate Film)

The substrate film which forms part of the adhesive film of the present invention is a film-shaped article comprised of a resin composition whch has the above-mentioned ingredients.

In the present invention, the substrate film can, for example, by produced by preparing a polymerizable composition which contains the above-mentioned cyclic olefin monomer, elastomer, and polymerization catalyst and various types of additives which are used in accordance with need, bulk polymerizing this to form a film shape, then, after the bulk polymerization or simultaneously with the bulk polymerization, cross-linking the cyclic olefin polymer obtained by the bulk polymerization to obtain a cross-linked cyclic olefin polymer.

The polymerizable composition is prepared by mixing the above-mentioned cyclic olefin monomer, elastomer, and polymerization catalyst and the various types of additives which are used in accordance with need. The polymerization catalyst may be used dissolved or suspended in a small amount of inert solvent in accordance with need. As such a solvent, n-pentane, n-hexane, n-heptane, liquid paraffin, mineral spirits, or other chain aliphatic hydrocarbon; cyclopentane, cyclohexane, methylcyclohexane, dimethylcyclohexane, trimethylcyclohexane, ethylcyclohexane, diethylcyclohexane, decahydronaphthalene, dicycloheptane, tricyclodecane, hexahydroindene, cyclooctane, or other alicyclic hydrocarbon; benzene, toluene, xylene, or other aromatic hydrocarbon; indene, tetrahydronaphthalene, or other hydrocarbon which has an alicyclic ring and aromatic ring; nitromethane, nitrobenzene, acetonitrile, or other nitrogen-containing hydrocarbon; diethylether, tetrahydrofuran, or other oxygen-containing hydrocarbon; etc. may be mentioned. Among these, use of an aromatic hydrocarbon, aliphatic hydrocarbon, alicyclic hydrocarbon, and hydrocarbon which has an alicyclic ring and aromatic ring is preferable. Further, so long as not causing a drop in activity as a polymerization catalyst, a liquid antiaging agent, plasticizer, or elastomer may also be used as a solvent.

The viscosity of the polymerizable composition at room temperature depends on the thickness of the substrate film which is produced, but usually is 3 to 30,000 Pa·s, preferably 5 to 500 Pa·s. If using an elastomer which can be dissolved in a cyclic olefin monomer, it is possible to suitably select the type and amount of use so as to adjust the viscosity of the polymerizable composition.

Further, as the method of bulk polymerization of the polymerizable composition to form a film shape, for example, the method of pouring or coating the polymerizable composition on a support, then bulk polymerizing it, the method of bulk polymerizing the polymerizable composition in a mold, etc. may be mentioned. From the viewpoint of enabling continuous production of a thin, uniform film, the method of pouring or coating the polymerizable composition on a support, then bulk polymerizing is preferable.

As the support which is used, it is possible to select one from the broad range of generally known materials such as resins, glass, and metal. As a resin, polyethylene terephthalate, polyethylene naphthalate, polycarbonate, polyarylate, or other polyesters; polypropylene, polyethylene, or other polyolefins; nylon or other polyamides; and polytetrafluoroethylene or other fluororesins; may be mentioned. Due to the ease of availability, polyesters are preferable. As the shape of the support, if the material is a metal, a drum or belt etc. may be mentioned, while if a resin, a film or belt etc. may be mentioned. A resin film is readily available and inexpensive, so is preferable.

The method of coating the polymerizable composition on a support is not particularly limited. The spray coating method, dip coating method, roll coating method, curtain coating method, die coating method, slit coating method, or other known coating methods may be mentioned.

The bulk polymerization is performed by heating up to a temperature where the polymerization catalyst activates in accordance with need. The heating tempeature for causing polymerization is usually 0 to 250°C, preferably 20 to 200°C. The method of heating the polymerizable composition is not particularly limited. The method of heating it by placing it on a hot plate, the method of using a press to press it while heating it (hot press), the method of pressing it by heated rollers, the method of using a heating furnace, etc. may be mentioned. The time for the polymerization reaction may be suitably determined in accordance with the amount of the polymerization catalyst and heating temperature, but usually is 1 minute to 24 hours.

Further, in the present invention, the cyclic olefin polymer which is obtained by bulk polymerization is cross-linked to obtain a cross-linked cyclic olefin polymer. The cross-linking may be performed after the polymerization or may be performed simultaneously with the polymerization, but from the viewpoint of being able to obtain the substrate film industrially advantageously by fewer steps, performing the cross-linking simultaneously with the polymerization is preferable.

As the method of cross-linking, (a) the method of using a cross-linkable monomer for at least part of the cyclic olefin monomer and polymerizing this to obtain a polymer which has a three-dimensionally cross-linked structure; (b) the method of adding a cross-linking agent to a polymerizable composition to cause bulk polymerization and further performing a cross-linking reaction simultaneously with the polymerization or after the polymerization to cross-link this; (c) the method of irradiating a cyclic olefin polymer which is obtained by bulk polymerization with light or electron beams to cause a cross-linking reaction after polymerization to cross-link it; etc. may be mentioned. These methods may be jointly used. Among these, from the viewpoint of ease of control of the physical properties of the obtained substrate film and economy, the method of (a) is preferable.

As the cross-linkable monomer which is used in the above method of (a), a cyclic olefin monomer which has two or more carbon-carbon double bonds may be used. Specifically, dicyclopentadiene and tricyclopentadiene may be mentioned. The cross-linking density can be controlled by the amount of the cross-linkable monomer used and the heating temperature at the time of polymerization. The amount of cross-linkable monomer used is suitably selected in accordance with the desired cross-linking density and is not particularly limited, but is preferably an amount which gives a ratio of cross-linkable monomer in the total amount of the cyclic olefin monomer of 0.1 to 100 mol%.

As the cross-linking agent which is used for the method of (b), a known thermal cross-linking agent or photo cross-linking agent may be used. As a thermal cross-linking agent, an organic peroxide, diazo compound, or nonpolar radical generator or other radical generator is preferable. The amount of the cross-linking agent used is, with respect to 100 parts by weight of the cyclic olefin monomer, preferably 0.1 to 10 parts by weight, more preferably 0.5 to 5 parts by weight. The temperature for cross-linking when using a thermal cross-linking agent is usually 100 to 250 °C, preferably 150 to 200°C. Further, the cross-linking time is not particularly limited, but is usually several minutes to several hours.

In the present invention, the bulk polymerization and the cross-linking are preferably performed in the absence of oxygen and water. Specifically, the method of performing the bulk polymerization and the cross-linking in a nitrogen gas or argon gas or other inert gas atmosphere; the method of performing the bulk polymerization and the cross-linking in a vacuum; the method of performing the bulk polymerization and the cross-linking in the state with the polymerizable composition coated on a support and covered by a resin film etc. to seal it; etc. may be mentioned. As the resin film, one illustrated as the above support may be used. By performing the bulk polymerization and the cross-linking in the absence of oxygen and water, it is possible to effectively prevent the inconvenience of the surface of the obtained substrate film being oxidized by oxygen or water and, due to this, the desired mechanical strength no longer being able to be obtained.

Alternatively, the substrate film which is used in the present invention may be produced by solution polymerization. In the method using solution polymerization, first, the above-mentioned cyclic olefin monomer and polymerization catalyst are used by a known solution polymerization method to obtain a cyclic olefin polymer. Next, the cyclic olefin polymer which is obtained by the solution polymerization is mixed with the above-mentioned elastomer and any additive or cross-linking agent used in accordance with need and is formed into a film shape by a known molding method. Further, after forming or simultaneously with forming, the cyclic olefin polymer can be cross-linked to obtain a cross-linked cyclic olefin polymer and thereby obtain a substrate film.

The substrate film is not particularly limited in thickness, but is preferably 1 to 500 µm, more preferably 2 to 200 µm, furthermore preferably 10 to 100 µm. If the substrate film is too thin, the mechanical strength will sometimes become lower and handling will become difficult. On the other hand, if the substrate film is too thick, inside the organic electrolyte-type energy storage device, the ratio of members not involved in energy storage will end up becoming higher, so this is not preferable.

### (Adhesive Layer)

The adhesive film for organic electrolyte-type energy storage device of the present invention is provided with an adhesive layer comprised of an acrylic-based adhesive agent on a substrate film comprised of the above-mentioned resin composition.

As the acrylic-based adhesive agent, for example, a adhesive agent comprised of an acrylic-based copolymer which is obtained by polymerizing a main monomer which can form a polymer which gives adhesiveness and has a relatively low glass transition point (Tg) with a comonomer which can form a polymer which gives bondability or cohesiveness and has a relatively high Tg or a functional group-containing monomer which can improve the formation of cross-linking points or bondability or other monomer ingredient is used.

As the main monomer, for example, ethyl acrylate, butyl acrylate, amyl acrylate, 2-ethylhexyl acrylate, octyl acrylate, or other acrylic acid alkyl ester, cyclohexyl acrylate or other acrylic acid cycloalkyl esters, benzyl acrylate or other acrylic acid aralkyl esters, butyl methacrylate, 2-ethylhexyl methacrylate, or other methacrylic acid alkyl esters, cyclohexyl methacrylate or other methacrylic acid cycloalkyl esters, benzyl methacrylate or other methacrylic acid aralkyl esters, etc. may be mentioned.

As the comonomer, for example, methyl acrylate, methyl methacrylate, ethyl methacrylate, vinyl acetate, vinyl propionate, vinylether, styrene, acrylonitrile, methacrylonitrile, or other vinyl group-containing compounds may be mentioned.

As the functional group-containing monomer, for example, acrylic acid, methacrylic acid, crotonic acid, maleic acid, fumaric acid, itaconic acid, or other carboxyl group-containing monomer; 2-hydroxyethyl(meth)acrylate, 2-hydroxypropyl(meth)acrylate, 4-hydroxybutyl(meth)acrylate, N-methylolacrylamide, allyl alcohol, or other hydroxyl group-containing monomer; dimethylaminoethyl(meth)acrylate, diethylaminoethyl(meth)acrylate, dimethylamino-propyl(meth)acrylate, or other tertiary amino group-containing monomer; acrylamide, methacrylamide, or other amide group-containing monomer; N-methyl(meth)acrylamide, N-ethyl(meth)acrylamide, N-methoxymethyl(meth)acrylamide, N-ethoxymethyl (meth) acrylamide, N-t-butylacrylamide, N-octylacrylamide, or other N-substituted amide group-containing monomer; glycidylmethacrylate or other epoxy group-containing monomer etc. may be mentioned. These monomers may be used as single types or as two or more types mixed together.

By suitably selecting the type or combination of the above monomer ingredients, it is possible to obtain an acrylic-based copolymer which has excellent adhesiveness, cohesiveness, and durability.

The acrylic-based copolymer which forms the acrylic-based adhesive agent is not particularly limited in weight average molecular weight, but for example is 50,000 to 1,500,000, preferably 100,000 to 1,000,000. If the molecular weight is too small, the adhesive agent becomes inferior in adhesive strength and cohesive strength, while if the molecular weight is too large, the adhesive agent becomes hard, the adhesiveness becomes insufficient, and the work efficiency in bonding easily falls. The acrylic-based copolymer is not particularly limited in Tg, but -20°C or less is preferable. If the Tg is over -20°C, depending on the usage temperature, the adhesive agent will become hard and sometimes the adhesiveness will no longer be able to be maintained.

As the acrylic-based adhesive agent, either the cross-linking type or non-cross-linking type can be used. In the case of a cross-linking type, the acrylic-based adhesive agent may contain a cross-linking agent in addition to the above acrylic-based copolymer. The cross-linking agent can be suitably selected in accordance with the type of the cross-linkable functional groups which the adhesive agent contains. For example, an epoxy-based cross-linking agent, isocyanate-based cross-linking agent, metal chelate-based cross-linking agent, metal alkoxide-based cross-linking agent, metal salt-based cross-linking agent, amine-based cross-linking agent, hydrazine-based cross-linking agent, aldehyde-based cross-linking agent, etc. may be mentioned. These cross-linking agents may be used alone or in combinations of two or more types.

The acrylic-based adhesive agent may further contain, in addition to the above, in accordance with need, a UV absorber, a tackifier, a softening agent (plasticizer), an anti-aging agent, stabilizer, filler, anti-aging agent, pigment, dye, silane coupling agent, or other additive. As the tackifier, for example, rosin or its derivative, polyterpene, terpene phenol resin, coumarone-indene resin, petroleum-based resin, styrene resin, xylene resin, etc. may be mentioned. As a softening agent, for example, liquid polyether, glycol ester, liquid polyterpene, liquid polyacrylate, phthalic acid ester, trimellitic acid esters, may be mentioned.

The adhesive layer is not particularly limited in thickness, but is preferably 5 to 100 µm, more preferably 10 to 50 µm, furthermore preferably 15 to 30 µm. If the adhesive layer is too thin, the adhesive strength will sometimes become insufficient, while if the adhesive layer is too thick, inside the organic electrolyte-type energy storage device, the ratio of members not involved in energy storage will end up becoming higher, so this is not preferable.

The method of forming the adhesive layer comprised of an acrylic-based adhesive agent on the substrate film is not particularly limited, but the method of directly coating an acrylic-based adhesive agent on the substrate film, the method of dissolving or dispersing the acrylic-based adhesive agent in a solvent and coating this on a substrate film, then drying it, etc. may be mentioned.

The adhesive film for organic electrolyte-type energy storage device of the present invention has a substrate film comprised of a resin composition which contains a cross-linked cyclic olefin polymer and an elastomer and, formed on that substrate film, an adhesive layer comprised of an acrylic-based adhesive agent, so is excellent in heat resistance and electrolytic solution resistance and has a high adhesive strength. Note that, the reason why the adhesive film for organic electrolyte-type energy storage device of the present invention is excellent in electrolytic solution resistance is believed to be as follows. That is, the adhesive film for organic electrolyte-type energy storage device of the present invention uses a substrate film which contains a cross-linked cyclic olef in polymer. This cross-linked cyclic olefin polymer is mainly comprised of a hydrocarbon. Therefore, it is resistant to swelling due to the organic electrolyte which is used for the organic electrolyte-type energy storage device. Further, the cross-linked cyclic olefin polymer which is contained in the substrate film and the acrylic-based adhesive agent which forms part of the adhesive layer are closely bonded by a high adhesive force due to the anchor effect.

Further, such an adhesive film for organic electrolyte-type energy storage device of the present invention can be suitably used as an adhesive film for fastening a wound energy storage element of the organic electrolyte-type energy storage device or an adhesive film for insulation of the tab parts for input/ouput to and from the energy storage element (adhesive film for preventing short-circuits due to contact of the pair of tabs with each other or contact with the outer jacket).

Here, as an organic electrolyte-type energy storage device, a lithium ion secondary cell, electric double-layer capacitor, lithium ion capacitor, etc. may be mentioned.

The lithium ion secondary cell is not particularly limited, but, for example, one which is provided with an energy storage element which consists of a positive electrode, which is comprised of a current collector on the two sides of which positive electrode active material layers are formed, and a negative electrode, which is comprised of a current collector layer on the two sides of which negative electrode active material layers are formed, wound up through a separator, with a pair of tabs for input/output of electric power to and from the energy storage element, and with an organic electrolyte etc. may be mentioned. Note that, as the current collector, iron, copper, aluminum, nickel, stainless steel, titanium, tantalum, gold, platinum, or other metal material may be mentioned. As the positive electrode active material, LiCoO₂, LiMnO₂, LiNiO₂, LiMn₂O₄, V₂O₅, V₆O₁₃, etc. may be mentioned, as the negative electrode active material, metal lithium or a lithium storing and releasing alloy, oxide, and carbon material etc. may be mentioned. As the separator, a polyethylene, polypropylene, or other polyolefin porous film, nonwoven fabric, or inorganic ceramic powder-containing porous resin coating, etc. may be mentioned. Further, as the pair of tabs, copper, aluminum, nickel, or other metal material may be mentioned. Furthermore, as the organic electrolyte, LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, (C₂F₅SO₂)NLi, or other lithium salt dissolved in dimethyl carbonate (DMC), ethylene carbonate (EC), diethyl carbonate (DEC), propylene carbonate (PC), butylene carbonate (BC), methylethyl carbonate (MEC), or other carbonates etc. may be mentioned.

Further, as the electric double layer capacitor, one which is provided with an energy storage element which is made of a pair of polar electrodes, each of which is comprised of a current collector on the two sides of which polar electrode layers are formed, wound up through a separator, with a pair of tabs for input/output of electric power to and from the energy storage element, and an organic electrolyte etc. may be mentioned. As the current collector, aluminum, aluminum oxide, platinum, nickel, tantalum, titanium, etc. may be mentioned. Further, as the active material which forms the polar electrode layer, active carbon, polyacene, carbon whiskers, graphite, etc. may be mentioned. As the separator, a polyethylene, polypropylene, or other polyolefin porous film, nonwoven fabric, mainly pulp porous film, rayon porous film, cellulose, etc. may be mentioned. Further, as the pair of tabs, copper, aluminum, nickel, or other metal material may be mentioned. As the electrolyte, (C₂H₅)₄NBF₄, (C₂H₅)₃(CH₃)NBF₄, (C₂H₅)₄NPF₆, or other ammonium salt dissolved in propylene carbonate (PC), ethylene carbonate (EC), butylene carbonate (BC), or other carbonates may be mentioned.

Furthermore, as the lithium ion capacitor, one which is provided with an energy storage element which is made of a polar electrode, which is comprised of a current collector on the two sides of which polar electrode layers are formed, and a negative electrode, which is comprised of a current collector layer on the two sides of which negative electrode active material layers are formed, wound up through a separator, with a pair of tabs for input/output of electric power to and from the energy storage element, and an organic electrolyte etc. may be mentioned. As the current collector, aluminum, platinum, nickel, tantalum, titanium, stainless steel, copper, etc. may be mentioned. As the active material which forms the polar electrode layer, active carbon, polyacene, carbon whiskers, graphite, etc. may be mentioned. As the negative electrode active material, metal lithium or a lithium storing and releasing alloy, oxide, carbon material, etc. may be mentioned. As the separator, a polyethylene, polypropylene, or other polyolefin porous film, nonwoven fabric, mainly pulp porous film, rayon porous film, cellulose, etc. may be mentioned. Further, as the pair of tabs, copper, aluminum, nickel, or other metal material may be mentioned. As the electrolyte, LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, (C₂F₅SO₂)NLi, or other lithium salt dissolved in propylene carbonate (PC), ethylene carbonate (EC), butylene carbonate (BC), or other carbonate etc. may be mentioned.

### EXAMPLES

Below, examples and comparative examples will be given to specifically explain the present invention. In the examples, "parts" and "%" are based on weight unless under special circumstances.

Note that, the definitions and methods of evaluation of the each properties are as follows.

### <Tensile Strength and Elongation>

The substrate film was measured for tensile strength and elongation based on JIS K6871 under conditions of a temperature of 180°C. The higher the tensile strength, the better. Further, the elongation is preferably 2 to 20% in range.

### <Heat Resistance>

An adhesive film was adhered to an aluminum sheet to prepare an aluminum-bonded sample. The prepared aluminum-bonded sample was heated by placing it on a hot plate which was heated to 200°C for 10 minutes. The appearance after heating was observed.

### <Electrolytic Solution Resistance>

An adhesive film was immersed in a 23°C electrolytic solution (EC (ethylene carbonate) :DEC (diethylene carbonate)=1:2 (volume ratio)) for 72 hours, then dried and adhered to a thickness 2 mm aluminum sheet to prepare an aluminum-bonded sample. Further, the prepared aluminum-bonded sample was measured for peel strength (N/20 mm width) under conditions of a peeling speed of 50 mm/min. and a tensile angle of 180°. The higher the peel strength, the better the electrolytic solution resistance can be judged to be.

### <Adhesive Strength to Separator>

An adhesive film was adhered to a separator made of a polyolefin-based material to prepare a separator-bonded sample. Further, the prepared separator-bonded sample was measured for peel strength (N/20 mm width) under conditions of a peel speed of 50 mm/min. and a tensile angle of 180°. Note that when using the adhesive film for fastening a wound up energy storage element, a high adhesive strength as a separator forming part of the energy storage element is demanded, so the higher the adhesive strength to the separator, the more suitable for fastening the wound energy storage element.

### <Adhesive Strength to Nickel Plate>

An adhesive film was adhered to a nickel plate to prepare a nickel-bonded sample. Further, the prepared nickel-bonded sample was measured for peel strength (N/20 mm width) under conditions of a peel speed of 50 mm/min. and a tensile angle of 180°. Note that, as the tab parts for input/output of electric power to and from the energy storage element (at least one tab among the pair of tabs), in general a nickel plate is used, so the higher the adhesive strength to a nickel plate, the more suitable for insulation of the tab part for input/output of electric power to and from the energy storage element.

### (Example 1)

A mixed monomer comprised of a cyclic olefin monomer constituted by dicyclopentadiene 43 parts and symmetric tricyclopentadiene 5 parts was mixed with an elastomer constituted by an ethylene-propylene copolymer elastomer (made by Dow Chemical, Versify (registered trademark) 2300 Elastomer) 2 parts, a polymerization catalyst constituted by a ruthenium catalyst which has the structure shown in the following formula (7) (VC843) 0.032 part, and an antioxidant (made by Ciba Specialty Chemical, Irganox (registered trademark) 1010) 2 parts to obtain a reaction stock solution (A).

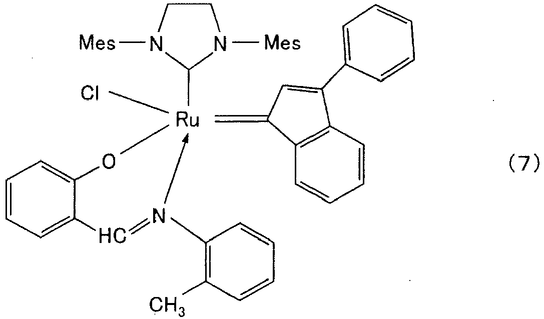

Further, separate from the above, a mixed monomer comprised of a cyclic olef in monomer constituted by dicyclopentadiene 43 parts and symmetric tricyclopentadiene 5 parts was mixed with an elastomer constituted by an ethylene-propylene copolymer elastomer (made by Dow Chemical, Versify 2300 Elastomer) 2 parts and an activant constituted by phenyltrichlorosilane (made by Wako Pure Chemical Industries) 0.09 part to obtain a reaction stock solution (B).

Next, the reaction stock solution (A) and reaction stock solution (B) which were obtained above were mixed by a line mixer. The obtained mixture was cast on a 50 µm thick polyethylene terephthalate (PET) carrier film at 25°C to form a film. Next, the obtained cast film was heated in a nitrogen atmosphere at 80°C for 10 minutes, then heated in a nitrogen atmosphere at 150°C for 1 hour to obtain a thickness 50 µm substrate film.

Further, the substrate film which was obtained above was coated with an acrylic-based adhesive agent constituted by a 2-ethylhexyl acrylate-acrylic acid copolymer (2-ethylhexyl acrylate units:acrylic acid units=95:5 (weight ratio) ; Mw=130000) and dried to thereby form a thickness 20 µm adhesive layer and obtain a total thickness 70 µm adhesive film. Further, the obtained substrate film was evaluated for tensile strength and elongation and, further, the obtained adhesive film was evaluated for heat resistance, electrolytic solution resistance, and adhesive strength to the separator and nickel plate. The results are shown in Table 1.

### (Example 2)

Except for using as an elastomer, instead of an ethylene-propylene copolymer elastomer, an ethylene-α-butene copolymer elastomer (made by Dow Chemical, Engage (registered trademark) 7467), the same procedure was followed as in Example 1 to prepare a substrate film and adhesive film and the same procedure was followed to evaluate them. The results are shown in Table 1.

### (Example 3)

Except for changing the amounts when preparing the reaction stock solution (A) and reaction stock solution (B), that is, the amount of dicyclopentadiene to 38 parts, the amount of symmetric tricyclopentadiene to 4.5 parts, and the amount of ethylene-propylene copolymer to 7.5 parts, the same procedure was followed as in Example 1 to prepare the substrate film. Further, except for using the obtained substrate film and using an acrylic-based adhesive agent constituted by a 2-ethylhexyl acrylate-acrylic acid copolymer with 2-ethylhexyl acrylate units:acrylic acid units =97:3 (weight ratio) (Mw=115000), the same procedure was followed as in Example 1 to obtain a total thickness 70 µm adhesive film. Further, the obtained substrate film and adhesive film were evaluated in the same way as in Example 1. The results are shown in Table 1.

### (Example 4)

Except for changing the amounts used when preparing the reaction stock solution (A) and reaction stock solution (B), that is, the amount of dicyclopentadiene to 41.17 parts, the amount of symmetric tricyclopentadiene to 3.83 parts, and the amount of ethylene-propylene copolymer to 5 parts, the same procedure was followed as in Example 1 to prepare a substrate film. Note that, in Example 4, the substrate film was made a thickness of 20 µm. Further, except for using the obtained substrate film and using an acrylic-based adhesive agent constituted by a 2-ethylhexyl acrylate-acrylic acid copolymer of 2-ethylhexyl acrylate units:acrylic acid units=96:4 (weight ratio) (Mw=120000), the same procedure was followed as in Example 1 to obtain a total thickness 40 µm adhesive film. Further, the obtained substrate film and adhesive film were evaluated in the same way as in Example 1. The results are shown in Table 1.

### (Example 5)

Except for making the thickness 80 µm, the same procedure was followed as in Example 4 to obtain a substrate film. Further, the obtained substrate film was used in the same way as Example 4 to obtain a total thickness 100 µm adhesive film. Further, the obtained substrate film and adhesive film were evaluated in the same way as in Example 1. The results are shown in Table 1.

### (Comparative Example 1)

Except for not using an elastomer constituted by an ethylene-propylene copolymer elastomer, the same procedure was followed as in Example 1 to prepare a substrate film and adhesive film and the same procedure was followed to evaluate them. The results are shown in Table 1.

### (Comparative Example 2)

The same procedure was followed as in Example 1 to prepare a substrate film. Further, except for using the obtained substrate film and using polybutadiene, instead of the acrylic-based adhesive agent constituted by the 2-ethylhexyl acrylate-acrylic acid copolymer, the same procedure was followed as in Example 1 to obtain a total thickness 70 µm adhesive film. Further, the obtained substrate film and adhesive film were evaluated in the same way as in Example 1. The results are shown in Table 1.

### (Comparative Example 3)

Except for using a substrate film constituted by a thickness 50 µm polyethylene terephthalate film (made by Unitika, Emblet (registered trademark)), the same procedure was followed as in Example 1 to obtain a thickness 70 µm adhesive film. Further, the obtained substrate film and adhesive film were evaluated in the same way as in Example 1. The results are shown in Table 1.

### (Comparative Example 4)

Except for using a substrate film constituted by a thickness 40 µm polypropylene film (made by Toyobo, Pylen (registered trademark) film), the same procedure was followed as in Example 1 to obtain a thickness 60 µm adhesive film. Further, the obtained substrate film and adhesive film were evaluated in the same way as in Example 1. The results are shown in Table 1.

### (Comparative Example 5)

Apolyimide adhesive film (made by Teraoka Seisakusho, No. 653F adhesive film comprised of polyimide substrate on which acrylic-based adhesive agent layer is formed) was evaluated in the same way as in Example 1. The results are shown in Table 1.

Table 1

**Table 1**

| | Substrate film | Adhesive layer | Substrate film thickness (*µ* m) | Evaluation | | | | | |
|---|---|---|---|---|---|---|---|---|---|
| | | | | Tensile strength of substrate film (MPa) | Elongation (%) | Heat resistance | Electrolytic solution resistance (N/20 mm) | Adhesive strength with separator (N/20 mm) | Adhesive strength with nickel plate (N/20 mm) |
| Example 1 | Cross-linked cyclic olefin polymer: ethylene-propylene copolymer elastomer =96:4 (weight ratio) | Acrylic-based adhesive agent (2-ethylhexyl acrylate units: acrylic acid units=95:5 (weight ratio)) | 50 | 45 | 7.2 | No change | 15 | 16 | 20 |
| Example 2 | Cross-linked cyclic olefin polymer ethylene-*α*-butene copolymer elastomer =96:4(weight ratio) | Acrylic-based adhesive agent (2-ethylhexyl acrylate units: acrylic acid units=95:5 (weight ratio)) | 50 | 44 | 6.5 | No change | 11 | 10 | 18 |
| Example 3 | Cross-linked cyclic olefin polymer: ethylene-propylene copolymer elastomer =85:15(weight ratio) | Acrylic-based adhesive agent (2-ethylhexyl acrylate units: acrylic acid units=97:3 (weight ratio)) | 50 | 38 | 8.2 | No change | 12 | 11 | 15 |
| Example 4 | Cross-linked cyclic olefin polymer: ethylene-propylene copolymer elastomer =90:10 (weight ratio) | Acrylic-based adhesive agent (2-ethylhexyl acrylate units: acrylic acid units=96:4 (weight ratio)) | 20 | 40 | 9.2 | No change | 10 | 10 | 15 |
| Example 5 | Cross-linked cyclic olefin polymer: ethylene-propylene copolymer elastomer =90:10 (weight ratio) | Acrylic-based adhesive agent (2-ethylhexyl acrylate units: acrylic acid units=96:4 (weight ratio)) | 80 | 42 | 9.8 | No change | 10 | 10 | 15 |
| Comparative Example 1 | Cross-linked cyclic olefin polymer | Acrylic-based adhesive agent (2-ethylhexyl acrylate units: acrylic acid units=95:5 (weight ratio)) | 50 | 10 | 2 | No change | 10 | 10 | 10 |
| Comparative Example 2 | Cross-linked cyclic olefin polymer: ethylene-propylene copolymer elastomer =96:4(weight ratio) | Polybutadiene | 50 | 45 | 13 | Peeling from aluminum sheet | 6 | 12 | 16 |
| Comparative Example 3 | Polyethylene terephthalate | Acrylic-based adhesive agent (2-ethylhexyl acrylate units: acrylic acid units=95:5 (weight ratio)) | 50 | 230 | 85 | Wrinkles due to deformation at surface | 2 | 13 | 15 |
| Comparative Example 4 | Polypropylene | Acrylic-based adhesive agent (2-ethylhexyl acrylate units: acrylic acid units=95:5 (weight ratio)) | 40 | 50 | 330 | Melting when heated to 200° C | 3 | 11 | 14 |
| Comparative Example 5 | Polyimide adhesive (polyimide substrate film+acrylic-film -based adhesive agent layer) | | - | - | - | No change | 5 | 10 | 17 |

As shown in Table 1, an adhesive film comprised of a substrate film which includes a cross-linked cyclic olefin polymer and an elastomer on which an acrylic-based adhesive agent layer is formed was excellent in tensile strength and elongation of the substrate film, was excellent in heat resistance and electrolytic solution resistance, and as excellent in adhesive strength with the separator and nickel plate (Examples 1 to 5).

On the other hand, when not blending an elastomer into the substrate film, the substrate film ended up inferior in elongation (Comparative Example 1).

Further, when forming the adhesive layer by polybutadiene and when forming the substrate film by polyethylene terephthalate and polypropylene, the films ended up being inferior in heat resistance and electrolytic solution resistance (Comparative Examples 2 to 4).

Furthermore, an adhesive film omprised of a polyimide substrate on which an acrylic-based adhesive agent layer is formed was inferior in electrolytic solution resistance (Comparative Example 5).

## Claims

1. An adhesive film for organic electrolyte-type energy storage device having a substrate film comprised of a resin composition which contains a cross-linked cyclic olefin polymer, and an elastomer and having an adhesive layer comprised of an acrylic-based adhesive agent which is formed on said substrate film.

2. The adhesive film for organic electrolyte-type energy storage device as set forth in claim 1, wherein said elastomer is an olefin-based elastomer.

3. The adhesive film for organic electrolyte-type energy storage device as set forth in claim 2, wherein said olefin-based elastomer is at least one type of elastomer which is selected from an ethylene-α-olefin copolymer elastomer and an ethylene-propylene-diene copolymer elastomer.

4. The adhesive film for organic electrolyte-type energy storage device as set forth in any one of claims 1 to 3, wherein said substrate film has a thickness of 1 to 500 µm.

5. The adhesive film for organic electrolyte-type energy storage device as set forth in any one of claims 1 to 4, wherein said substrate film is comprised of a resin composition which is obtained by bulk polymerization of a polymerizable composition which contains a cyclic olefin monomer, elastomer, and polymerization catalyst.

6. The adhesive film for organic electrolyte-type energy storage device as set forth in claim 5, wherein said cyclic olefin monomer is a norbornene-based monomer.

7. The adhesive film for organic electrolyte-type energy storage device as set forth in any one of claims 1 to 6, wherein the amount of the elastomer is, with respect to 100 parts by weight of the cross-linked cyclic olefin polymer, 0.5 to 90 parts by weight.

8. The adhesive film for organic electrolyte-type energy storage device as set forth in any one of claims 1 to 7, which is an adhesive film for fastening a wound battery element.

9. The adhesive film for organic electrolyte-type energy storage device as set forth in any one of claims 1 to 8, which is an adhesive film for insulation use of a tab part for input/output of electric power to the energy storage element.

## Patentansprüche

1. Eine Haftfolie für organische Energiespeichervorrichtung vom Elektrolyttyp, die eine Trägerfolie, die eine Harzzusammensetzung, die ein vernetztes cyclisches Olefinpolymer enthält, und ein Elastomer umfasst, und die eine Haftschicht, umfassend ein Klebmittel auf Acrylbasis, umfasst, die auf der Trägerfolie gebildet ist.

2. Die Haftfolie für organische Energiespeichervorrichtung vom Elektrolyttyp gemäß Anspruch 1, wobei das Elastomer ein Elastomer auf Olefinbasis ist.

3. Die Haftfolie für organische Energiespeichervorrichtung vom Elektrolyttyp gemäß Anspruch 2, wobei das Elastomer auf Olefinbasis mindestens ein Elastomertyp ist, der aus einem Ethylen-α-olefincopolymer-Elastomer und einem Ethylen-propylen-diencopolymer-Elastomer ausgewählt ist.

4. Die Haftfolie für organische Energiespeichervorrichtung vom Elektrolyttyp gemäß einem der Ansprüche 1 bis 3, wobei die Trägerfolie eine Dicke von 1 bis 500 µm hat.

5. Die Haftfolie für organische Energiespeichervorrichtung vom Elektrolyttyp gemäß einem der Ansprüche 1 bis 4, wobei die Trägerfolie eine Harzzusammensetzung umfasst, die durch Massepolymerisation einer polymerisierbaren Zusammensetzung, die ein cyclisches Olefinmonomer, ein Elastomer und einen Polymerisationskatalysator enthält, erhalten wird.

6. Die Haftfolie für organische Energiespeichervorrichtung vom Elektrolyttyp gemäß Anspruch 5, wobei das cyclische Olefinmonomer ein Monomer auf Norbornenbasis ist.

7. Die Haftfolie für organische Energiespeichervorrichtung vom Elektrolyttyp gemäß einem der Ansprüche 1 bis 6, wobei die Menge des Elastomers, bezogen auf 100 Gewichtsteile des vernetzten cyclischen Olefinpolymers, 0,5 bis 90 Gewichtsteile beträgt.

8. Die Haftfolie für organische Energiespeichervorrichtung vom Elektrolyttyp gemäß einem der Ansprüche 1 bis 7, die eine Haftfolie zum Befestigen eines gewickelten Batterieelements ist.

9. Die Haftfolie für organische Energiespeichervorrichtung vom Elektrolyttyp gemäß einem der Ansprüche 1 bis 8, die eine Haftfolie zur Isolationsverwendung eines Abgriffteils für den Input/Output von elektrischer Energie zu dem Energiespeicherelement ist.

## Revendications

1. Film adhésif pour un dispositif de stockage d'énergie de type électrolyte organique ayant un film de substrat se composant d'une composition de résine qui contient un polymère oléfinique cyclique réticulé, et un élastomère et ayant une couche adhésive se composant d'un agent adhésif à base d'acrylique qui est formé sur ledit film de substrat.

2. Film adhésif pour un dispositif de stockage d'énergie de type électrolyte organique selon la revendication 1, dans lequel ledit élastomère est un élastomère à base d'oléfine.

3. Film adhésif pour un dispositif de stockage d'énergie de type électrolyte organique selon la revendication 2, dans lequel ledit élastomère à base d'oléfine est au moins un type d'élastomère qui est choisi parmi un élastomère de copolymère d'éthylène-α-oléfine et un élastomère de copolymère d'éthylène-propylène-diène.

4. Film adhésif pour un dispositif de stockage d'énergie de type électrolyte organique selon l'une quelconque des revendications 1 à 3, dans lequel ledit film de substrat a une épaisseur de 1 à 500 µm.

5. Film adhésif pour un dispositif de stockage d'énergie de type électrolyte organique selon l'une quelconque des revendications 1 à 4, dans lequel ledit film de substrat se compose d'une composition de résine qui est obtenue par polymérisation en masse d'une composition polymérisable qui contient un monomère oléfinique cyclique, un élastomère et un catalyseur de polymérisation.

6. Film adhésif pour un dispositif de stockage d'énergie de type électrolyte organique selon la revendication 5, dans lequel ledit monomère oléfinique cyclique est un monomère à base de norbornène.

7. Film adhésif pour un dispositif de stockage d'énergie de type électrolyte organique selon l'une quelconque des revendications 1 à 6, dans lequel la quantité de l'élastomère est, par rapport à 100 parties en poids du polymère oléfinique cyclique réticulé, de 0,5 à 90 parties en poids.

8. Film adhésif pour un dispositif de stockage d'énergie de type électrolyte organique selon l'une quelconque des revendications 1 à 7, qui est un film adhésif pour la fixation d'un élément de batterie bobiné.

9. Film adhésif pour un dispositif de stockage d'énergie de type électrolyte organique selon l'une quelconque des revendications 1 à 8, qui est un film adhésif pour une utilisation d'isolation d'une partie de tabulation pour l'entrée/la sortie d'énergie électrique au niveau de l'élément de stockage d'énergie.
